# EUROPEAN PATENT SPECIFICATION

(11) **EP 1 625 817 B1**
(45) Date of publication and mention of the grant of the patent: **04.06.2008**
(21) Application number: 05102339.8
(22) Date of filing: 23.03.2005
(51) Int. Cl.: A47J 37/06

(54) **Improved apparatus for preparing food, in particular by broiling**
Verbessertes Gerät zum Zubereiten von Nahrungsmitteln, speziell durch Braten
Appareil amélioré pour préparer des aliments, en particulier des grillades

(30) Priority: 13.08.2004 IT PN20040057
(43) Date of publication of application: 15.02.2006
(73) Proprietor: ELECTROLUX PROFESSIONAL S.p.A., 33170 Pordenone (IT)
(72) Inventor: Vassallo Rossi, Alessandro, Madrid (ES)
(74) Representative: Giugni, Valter

(56) References cited:
- US-A- 1 271 796
- US-A- 2 423 964
- US-A- 4 669 373

## Description

The present invention refers to an improved kind of cooking hotplate for broiling, grilling and toasting food, in particular meat slices, meatballs, toasts and the like (eg. small pizzas) or, more generally, all those foods that have a flat thickness conformation.

It is a largely known fact that, in both professional and household food-preparation applications for commercial and non-commercial catering applications and consumer uses, cooking food by broiling or similar surface grilling processes is a largely used practice owing to both the cooking speeds and the peculiar cooking results it affords. However, this kind of food preparation is also connected with some peculiar drawbacks and problems, which may be summarized as follows:
- a first such drawback lies in the fact that the food resting on the hotplate for broiling is of course only broiled on its lower side, i.e. the surface lying in contact with the hotplate, so that, in order to allow it to be broiled also on the opposite side, the need arises for it to be duly turned over; this operation, however, generally requires a certain amount of manual dexterity and, in addition, it quite frequently causes the areas around the broiling hotplate to become soiled;
- a second drawback is connected with the grilling or broiling practice itself; quite frequently, in fact, the food to be grilled, broiled or toasted is accompanied by substances applied to enhance the taste and flavour thereof, such as for instance sauces, natural spices, dressings, salt and similar flavourers; these operations, although generally easy to be carried out, however require that these substances be first prepared and possibly mixed together; in addition, even the operation to be performed in view of applying or pouring such ingredients onto the food placed on the hotplate for broiling may inherently bring about some problem of incorrect dosing and even involve the risk of getting burned, owing to the hands that pour or apply directly said ingredients onto the food being moved close to the hotplate on which the food itself lies.
From both US 2,423,964 and US 4,669,373 it is known a kind of two sided cooking device, which is electrically powered, and which is able to grill single dishes, specifically for commercially sized restaurants; however the items to be cooked by said devices cannot be added, during the cooking process, with special substances applied to enhance the taste and flawor thereof, such as sauces, spices, dressings, salt and similar flawourers.

It would therefore be desirable, and it is actually a main object of the present invention, to provide a broiling hotplate which is capable of operating in a traditional mode and manner to yield the generally expected broiling results, while however being provided with means and/or devices that are adapted to do away with and/or at least minimize the above-noted drawbacks.

According to the present invention, this aim is reached in a particular kind of broiling hotplate associated with the arrangements incorporating the features as recited in the appended claims.

Features and advantages of the present invention will anyway be more readily understood from the description that is given below by way of nonlimiting example with reference to the accompanying drawings, in which:
- Figure 1 is a perspective view of an apparatus according to the state of the art;
- Figure 2 is a symbolical, median cross-sectional view of the apparatus shown in Figure 1;
- Figure 3 is a symbolical, cross-section view of an improved embodiment of the apparatus shown in Figures 1 and 2 according to the present invention;
- Figure 4 is a symbolical, cross-sectional view of a further improved embodiment of the apparatus shown in Figure 3;
- Figure 5 is a symbolical view of different embodiment of the apparatus shown in Figure 4;
- Figure 6 is a symbolical view of a further improved embodiment of the apparatus shown in Figure 4;
- Figure 7 is a symbolical view of a still another different embodiment of the apparatus shown in Figure 4.

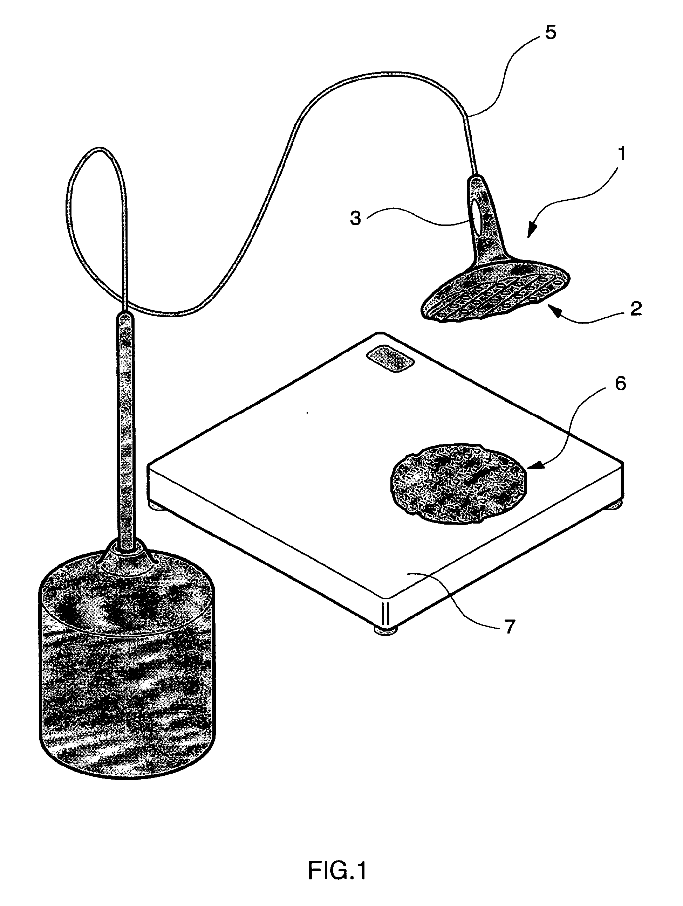

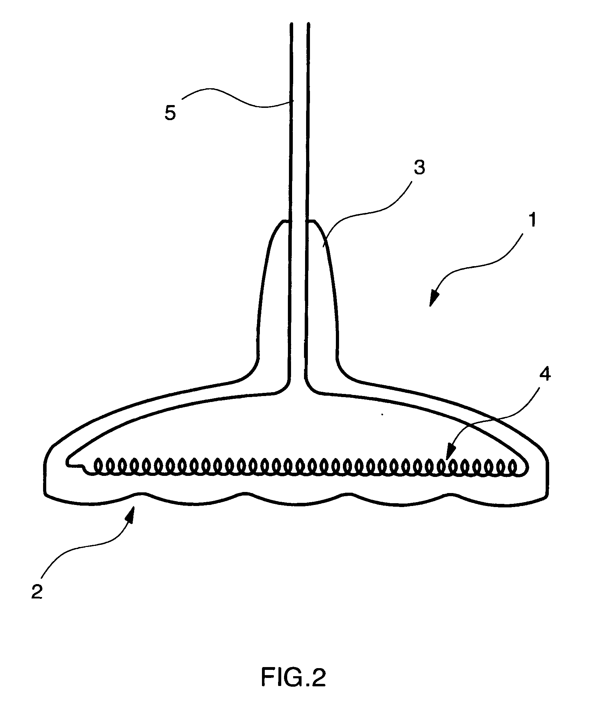

With reference to Figures 1 and 2, the state of the art is essentially based on the feature according to which the food is broiled, grilled or toasted on both the opposite faces thereof at the same time, and not successively. To this purpose, there is provided a manually movable apparatus 1, which is not tied to or restrained by any other rigid body, so that it can take any desired position and orientation; such apparatus, which is preferably made of metal owing to the reasons that will be more clearly understood further on in the following description, is provided on a side with a planar hotplate 2, which may possibly feature a wavy surface with evenly spaced corrugations, so as to simulate the effect of a gridiron, and, on the other side, with a handle 3 enabling the position and the orientation of the same apparatus to be varied as desired.

Inside this planar hotplate 2 there are fitted one or more electric heating elements 4, the arrangement and power ratings of which are selected so as to ensure that the heat generated and released by these heating elements will cause the outer surface of said planar hotplate 2 to become red-hot, thereby providing the second food broiling surface.

Finally, the above-mentioned electric heating elements 4 are power-supplied via a common flexible electric connection 5 to a power-supply source (not shown).

The way in which the present invention works can at this point be fully and clearly appreciated: it is in fact sufficient for said heating elements to be electrically energized for the surface of said hotplate 2 to become suitably red-hot and be able to be placed over and, possibly, even pressed against the upper surface of the food 6 lying conventionally on a second, much broader hotplate 7, as this is illustrated symbolically in Figure 1.

In a most suitable manner, other pieces of food to be broiled may advantageously be placed on said second hotplate 7, so that the user or operator will be able to grip the handle 3 and press said hotplate 2 against all said other pieces of food in a sequence, thereby obtaining an even broiling effect of both sides of the food being treated, without any need arising for said food to be turned or handled in any way.

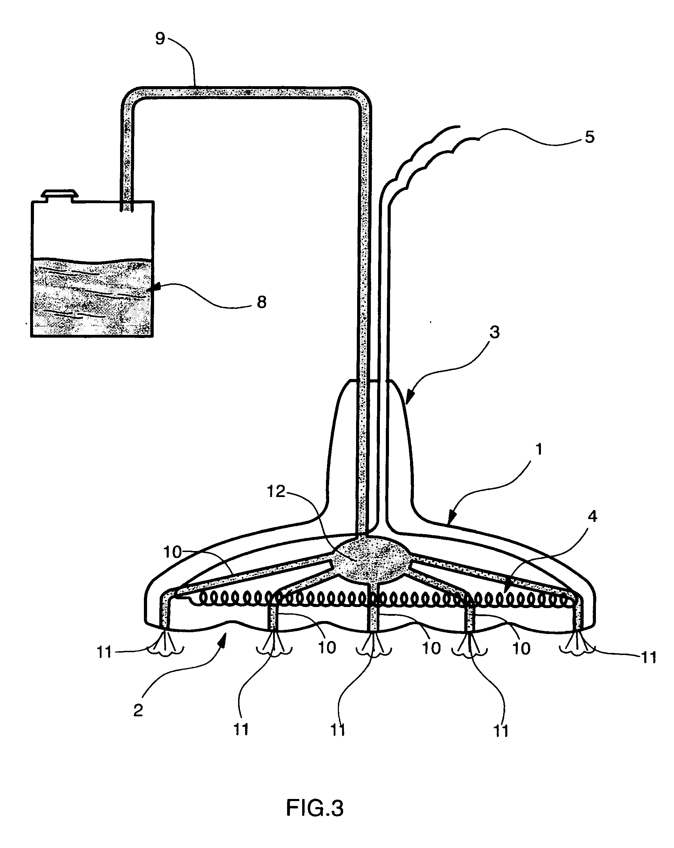

The above-described solution allows for a number of advantageous improvements to be implemented. So, for instance, with reference to Figure 3 a first improvement lies in the possibility for a stationary boiler 8 provided in a remote location, and adapted to supply a flexible conduit with a flow of steam, to be associated to said apparatus 1, as well as for a plurality of inner conduits 10 debouching with a respective port 11 at the surface of said planar hotplate 2 to be provided inside said apparatus 1. Such flexible conduit 9 is of course connected to said inner conduits 10, possibly via a steam-box 12, so that the steam generated in and flowing from said boiler 8 is able to reach said inner conduits 10 and then issue through said ports 11 for spreading over the outer surface of said hotplate 2.

This improvement allows for a more complete broiling treatment of the food to be carried out with a more even heat distribution effect, while avoiding undesirable scorched, burnt zones or even insufficiently broiled zones of the food being treated.

In addition, steam can prove effective in sealing the surface of the meat being cooked, which is beneficial in reducing liquid losses during broiling and increasing the juiciness thereof.

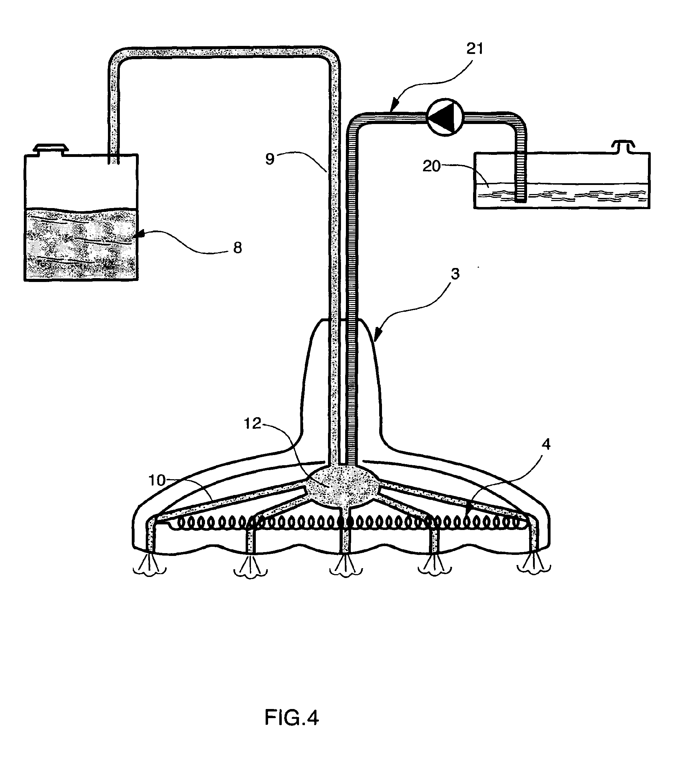

With reference to Figure 4, a second improvement can be implemented as follows: further to the improvement described above with reference to Figure 3, there is provided an external reservoir 20 containing a flavouring substance, a sauce or any similar ingredient adapted to aid in giving the food being broiled a particular taste, flavour or a more appealing appearance. This reservoir is connected via a respective conduit 21 to said inner conduits 10, possibly via a manifold-like distribution chamber provided inside said apparatus 1, wherein said distribution chamber may be the same afore described steam-box 12.

This improvement practically works by enabling not only the steam generated in the boiler 8, but also said flavouring or similar substances contained in the external reservoir 20 to reach the surface of the hotplate 2, in which said flavouring or similar substances may be pumped into and through said conduit 21 by an appropriate small, selectively actuatable pump 22 installed in the free section of said conduit 21 and adapted to suck up, i.e. draw said substances from said reservoir 20.

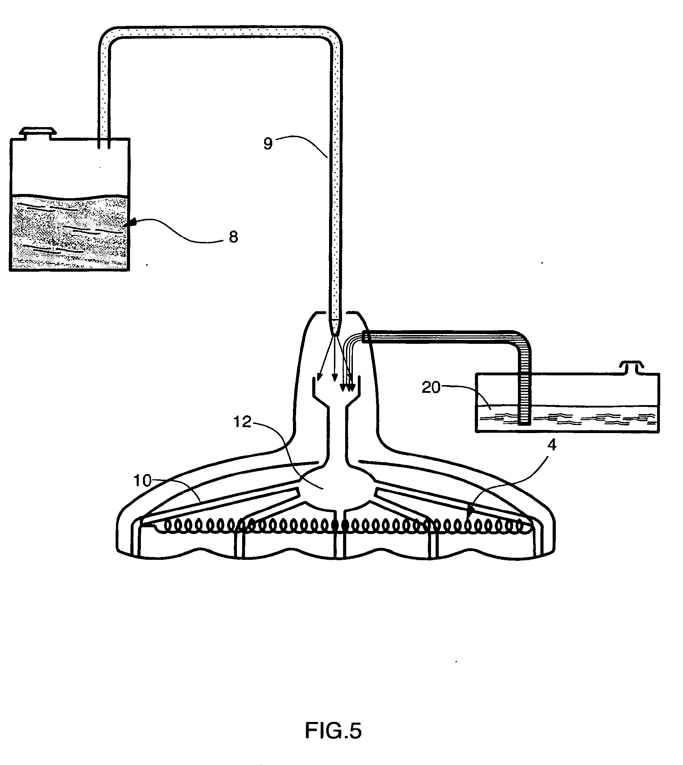

With reference to Figure 5, said flavouring or similar substances may also be drawn from their reservoir, owing to a Venturi effect, by interrupting said flexible conduit 9 inside the same apparatus 1 and providing the resulting terminal end portion of said conduit with a proper nozzle 91, in the proximity of which there is arranged the outlet of said conduit 21 coming from the external reservoir 20. The substances contained in said reservoir are practically drawn up and brought along the conduit up to the hotplate by the same steam flowing through said inner conduits 10, wherein such drawing effect is facilitated by the fact that the heat of the steam helps in increasing the fluidity and, as a result, improving the distribution of said substances.

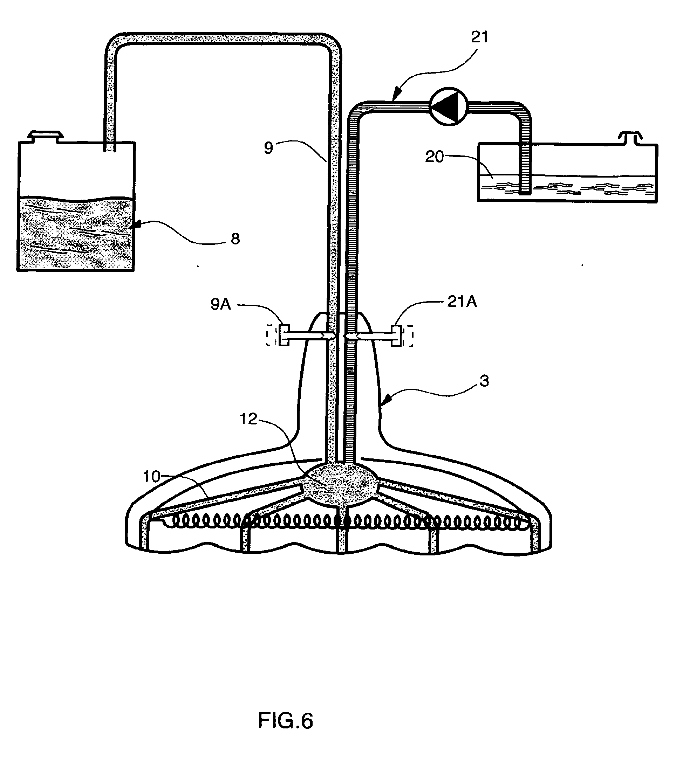

With reference to Figure 6, a further improvement consists in providing appropriate shut-off means, typically hydraulic-type, manually actuatable valves 9A, 21A adapted to open and/or close said conduits 9, 21 connecting said boiler and said reservoir, respectively, to said apparatus 1. In an advantageous manner, these valves 9A, 21A are arranged directly on said handle 3 of the apparatus 1, so as to make it more convenient and practical to use.

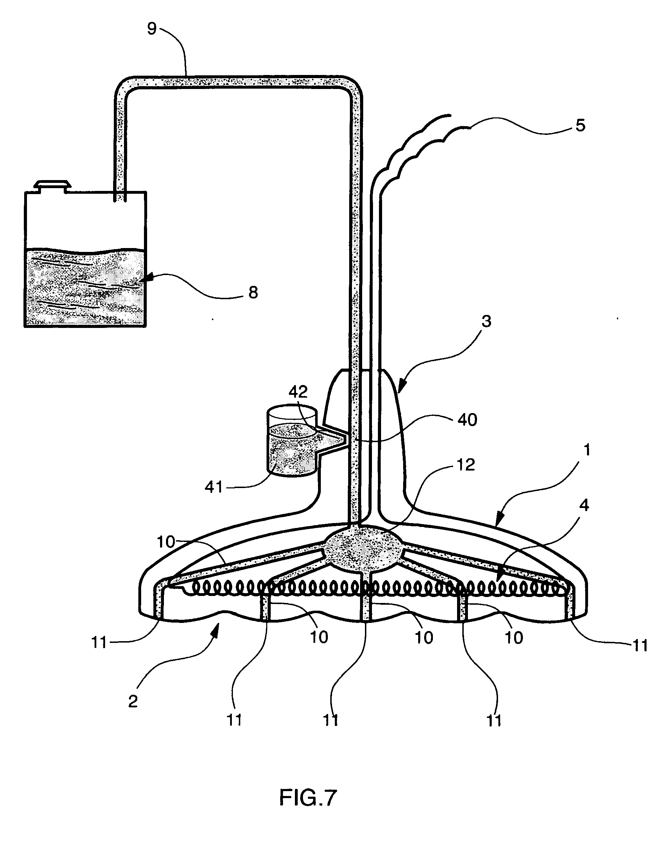

With reference to Figure 7, a still further improvement, over the embodiments described and illustrated with reference to Figures 4 to 6, consists in the fact that, on said apparatus 1, there is provided an access port 40 that enables said inner conduits 10, or said steam box or distribution chamber 12, to communicate with the outside ambient, and that on this access port there is capable of being arranged a container, such as for instance a capsule or cartridge 41, provided with a mouth 42 that allows the interior of said container 41 to communicate with the outside. This access port and this mouth are sized, and are provided with attachment means (not shown) enabling them to engage each other, so as to enable the substances contained in said container 41 to be easily transferred either into the flexible conduit 9 coming from said boiler 8 or directly into said inner conduits 10 of the apparatus 1 owing to the sucking effect of the steam flowing through the flexible conduit 9. There may also be provided other means (not shown, but largely known to and readily intuitable by those skilled in the art) that can favour the outflow of the content of said container 41 towards said access port 40 and into said conduit 9.

This solution is particularly advantageous in household or consumer applications, when the amount of substance to use is rather small, so that it would be unpractical, or unfitting, to make use of a real external reservoir to be preliminarily filled with the substances to be poured onto the food being broiled.

In this manner, all it takes is to simply replace said external reservoir with a replaceable cartridge, that will be pre-filled with a pre-established and limited amount of substance of a specific kind, in order to be able to attain the particular advantages of the present invention in a quick, clean and low-cost manner, without any loss in versatility.

## Claims

1. Arrangement for broiling, grilling or toasting solid food pieces, such as in particular meat slices, meatballs, hamburgers or some types of vegetables prepared and cut to a limited thickness, comprising :
- a manually movable and positionable food-treatment apparatus (1) that includes a hotplate (2) of a limited size and is provided with at least an upper handle (3), in which said apparatus further
- electric heating means (4) arranged thereinside and adapted to heat up said hotplate to a very hot temperature and
- a respective power-supply connection (5) connecting said electric heating means to appropriate external power-supply means, **characterized in that**:
- said food-treatment apparatus (1) further comprises a plurality of inner conduits (10) adapted to convey respective flows of gas or steam up to the outer surface of said hotplate,
- there is provided a boiler (8) located separately from said hotplate food-treatment apparatus and provided with an inner reservoir, and
- there is provided a flexible conduit (9) adapted to connect said inner reservoir of said boiler with said inner conduits (10).

2. Arrangement according to claim 1, **characterized in that:**
- there is provided an external reservoir (20) adapted to contain substances aimed at enhancing the flavour or completing the treatment of the food, and
- there are provided respective conduits (21, 9) independently connecting the interior of said external reservoir (20) and said boiler (8) to one or more of said inner conduits (10) of said hotplate food-treatment apparatus.

3. Arrangement according to claim 2, **characterized in that** in said conduit (21) connecting said external reservoir (20) there is provided a selectively operable suction pump (22) adapted to transfer the substances contained in said external reservoir (20) into said apparatus (1).

4. Arrangement according to claim 1, **characterized in that**:
- there is provided a flexible conduit (9) adapted to connect said inner reservoir of said boiler (8) with an internal portion of said apparatus (1) and terminating with a nozzle (91), and **in that** said conduit (21), coming from said external reservoir (20) debouches in the proximity of said nozzle (91).

5. Arrangement according to claim 2, **characterized in that** on said food-treatment apparatus there are provided shut-off means (9A, 21A) adapted to selectively open and/or close said conduit (9) coming from said boiler (8) and/or said conduit (21) coming from said external reservoir (20).

6. Arrangement according to claim 1, **characterized in that** said food-treatment apparatus is provided with an access port (40) that enables one or more of said inner conduits (10) to communicate with the outside ambient, and that on this access port (40) there is capable of being removably applied a container (41), the interior of which is accessible from the outside via an appropriate mouth (42), said access port and said mouth being sized and mutually engageable so as to enable the substances contained in said container (41) to be either freely or forcedly transferred into one or more of said inner conduits (10) of said hotplate food-treatment apparatus (1).

## Patentansprüche

1. Anordnung zum Braten, Grillen oder Toasten von festen Nahrungsmittelstücken, wie insbesondere Fleischstücken, Fleischbällchen, Hamburgern oder einigen Gemüsesorten, die zubereitet und auf eine begrenzte Dicke zugeschnitten sind, umfassend:
- eine manuell bewegliche und positionierbare Nahrungsmittelbehandlungsvorrichtung (1), die eine Heizplatte (2) von beschränkter Größe umfasst und mit mindestens einem oberen Griff (3) versehen ist,
- elektrische Heizmittel (4), die in ihr angeordnet sind und geeignet sind, die Heizplatte auf eine sehr heiße Temperatur aufzuheizen, und
- eine jeweilige Stromversorgungsverbindung (5), die die elektrischen Heizmittel mit geeigneten externen Stromversorgungsmitteln verbindet,
**dadurch gekennzeichnet, dass**
- die Nahrungsmittelbehandlungsvorrichtung (1) darüber hinaus eine Vielzahl von inneren Leitungen (10) umfasst, die geeignet sind, jeweilige Gas- oder Dampfströme zur Außenfläche der Heizplatte hinaufzubefördern,
- ein Kessel (8) vorgesehen ist, der getrennt von der Nahrungsmittelbehandlungsvorrichtung mit Heizplatte angeordnet ist und mit einem inneren Behälter versehen ist, und
- eine biegsame Leitung (9) vorgesehen ist, die geeignet ist, den inneren Behälter des Kessels mit den inneren Leitungen (10) zu verbinden.

2. Anordnung nach Anspruch 1, **dadurch gekennzeichnet, dass**
- ein externer Behälter (20) vorgesehen ist, der geeignet ist, Substanzen zu enthalten, die dazu dienen, den Geschmack zu verstärken oder die Behandlung des Nahrungsmittels zu vervollständigen, und
- jeweilige Leitungen (21, 9) vorgesehen sind, die das Innere des externen Behälters (20) und des Kessels (8) unabhängig mit einer oder mehreren der inneren Leitungen (10) der Nahrungsmittelbehandlungsvorrichtung mit Heizplatte verbinden.

3. Anordnung nach Anspruch 2, **dadurch gekennzeichnet, dass** in der Leitung (21) zur Verbindung des externen Behälters (20) eine selektiv bedienbare Saugpumpe (22) vorgesehen ist, die geeignet ist, die in dem externen Behälter (20) enthaltenen Substanzen in die Vorrichtung (1) zu befördern.

4. Anordnung nach Anspruch 1, **dadurch gekennzeichnet, dass**
- eine biegsame Leitung (9) vorgesehen ist, die geeignet ist, den inneren Behälter des Kessels (8) mit einem inneren Abschnitt der Vorrichtung (1) zu verbinden, und die in einer Düse (91) endet, und dass die von dem externen Behälter (20) kommende Leitung (21) in der Nähe der Düse (91) mündet.

5. Anordnung nach Anspruch 2, **dadurch gekennzeichnet, dass** an der Nahrungsmittelbehandlungsvorrichtung Absperrmittel (9A, 21A) vorgesehen sind, die geeignet sind, die von dem Kessel (8) kommende Leitung (9) und/oder die von dem externen Behälter (20) kommende Leitung (21) selektiv zu öffnen und/oder zu schließen.

6. Anordnung nach Anspruch 1, **dadurch gekennzeichnet, dass** die Nahrungsmittelbehandlungsvorrichtung mit einer Zugangsöffnung (40) versehen ist, die es einer oder mehreren der inneren Leitungen (10) ermöglicht, mit der äußeren Umgebung zu kommunizieren, und dass an dieser Zugangsöffnung (40) ein Behälter (41) auf abnehmbare Weise angebracht werden kann, dessen Inneres von außen über einen entsprechenden Einlass (42) zugänglich ist, wobei die Zugangsöffnung und der Einlass entsprechend bemessen und ineinanderfügbar sind, um es den in dem Behälter (41) enthaltenen Substanzen zu ermöglichen, entweder frei oder mit Zwang in eine oder mehrere der inneren Leitungen (10) der Nahrungsmittelbehandlungsvorrichtung (1) mit Heizplatte befördert zu werden.

## Revendications

1. Système pour griller, rôtir ou toaster des morceaux d'aliments solides, tels qu'en particulier, des tranches de viande, des boulettes de viande, des hamburgers ou certains typas de légumes préparés et coupés à une épaisseur limitée, comprenant:
un appareil (1) dé traitement des aliments mobile et positionnable manuellement qui inclut une plaque chauffante, (2) d'une taille limitée et est équipé d'au moins une poignée supérieure.(3),
des moyens de chauffage électrique (4) disposés à l'intérieur de celui-ci et adaptés pour chauffer ladite plaque chauffante à une température très élevée et
- une connexion d'alimentation en puissance respective (5) reliant lesdits moyens de chauffage électriques à des moyens d'alimentation en puissance externe appropriés, **caractérisé en ce que**
- ledit appareil. (1) de traitement des aliments comprend en outre une pluralité de conduits internes (10) adaptés pour transporter des flux respectifs de gaz ou de vapeur jusqu'à la surface extérieure de ladite plaque chauffante,
- une chaudière (8) est fournie, disposée séparément dudit appareil de traitement des aliments à plaque chauffante et équipée d'un réservoir interne, et
un conduit flexible (9) est fourni, adapté pour relier ledit réservoir interne de ladite chaudière avec lesdits conduits internes (10).

2. Système selon la revendication 1, **caractérisé en ce que**
- un réservoir externe (20) est fournit adapte pour contenir des substances; destinées à rehausser le goût ou compléter le traitement des aliments, et
- des conduits (21,9) respectifs sont fournis, reliant de manière indépendante l'intérieur dudit réservoir externe (20) et de ladite chaudière (8) à un ou plusieurs desdits conduits internes (10) dudit appareil de traitement des aliments à plaque chauffante.

3. Système selon la revendication 2, **caractérisé en ce que**, dans ledit conduit (21) reliant ledit réservoir externe (20), une pompe aspirante (22) pouvant fonctionner de manière sélective est fournie, adaptée pour transférer les substances contenues dans ledit réservoir externe (20) vers ledit appareil (1).

4. Système selon la revendication 1, **caractérisé en ce que**
- un conduit flexible (9) est fourni, adapté pour relier ledit réservoir interne de ladite chaudière (8) avec une portion intérieure dudit appareil (1) et se terminant par une buse (91), et **en ce que** ledit conduit (21), arrivant dudit réservoir externe (20), débouche à proximité de ladite buse (91).

5. Système selon la revendication 2, **caractérisé en ce que**, sur ledit appareil de traitement des aliments, des moyens d'interruption (9A,21A) sont fournis, adaptés pour ouvrir et/ou fermer de manière sélective ledit conduit (9) arrivant de, ladite chaudière (e) et/ou ledit conduit (21) arrivant dudit réservoir externe (20).

6. Système selon la revendication 1, **caractérisé en ce que** ledit appareil de traitement des agents est équipé d'un orifice d'accès (40) qui permet à un ou plusieurs desdits conduits internes (10) de communiquer avec l'environnement extérieur, et **en ce que**, sur cet orifice d'accès (40), un récipient (41) peut être appliqué de manière amovible, dont l'intérieur est accessible à partir de l'extérieur via une embouchure appropriée (42), ledit orifice d'accès et ladite embouchure étant dimensionnés et pouvant s'engager mutuellement de sorte à permettre aux substances contenues dans ledit récipient (41) d'être transférées soit librement, soit de manière forcée, vers l'un ou plusieurs desdits conduits internes (10) dudit appareil (1) de traitement des aliments à plaque chauffante.
